# EUROPÄISCHE PATENTSCHRIFT

(11) **EP 3 804 064 B1**
(45) Veröffentlichungstag und Bekanntmachung des Hinweises auf die Patenterteilung: **29.03.2023**
(21) Anmeldenummer: 19726409.6
(22) Anmeldetag: 27.05.2019
(51) Int. Cl.: H02G 7/00, H01B 17/00, H02G 1/02

(54) **VERSCHMUTZUNGSSCHUTZ FÜR HOCHSPANNUNGSISOLATOREN**
PROTECTION AGAINST CONTAMINATION FOR HIGH VOLTAGE INSULATORS
PROTECTION CONTRE LA POLLUTION POUR ISOLATEURS HAUTE TENSION

(30) Priorität: 30.05.2018 EP 18175021
(43) Veröffentlichungstag der Anmeldung: 14.04.2021
(73) Patentinhaber: Bayernwerk Netz GmbH, 93049 Regensburg (DE)
(72) Erfinder: TAUBER, Wolfgang, 92676 Eschenbach (DE)
(74) Vertreter: Glawe, Delfs, Moll
(86) Internationale Anmeldenummer: PCT/EP2019/063630
(87) Internationale Veröffentlichungsnummer: WO 2019/228968

(56) Entgegenhaltungen:
- CN-A- 104 200 935
- CN-A- 105 028 385
- CN-U- 203 826 142
- EA-B1- 027 265
- JP-A- 2003 189 447

## Beschreibung

Die Erfindung betrifft eine Verschmutzungsschutzvorrichtung für Hochspannungsisolatoren sowie eine Anordnung aus Verschmutzungsschutzvorrichtung und Hochspannungsisolator.

Überirdische Hochspannunngsleitungen sind regelmäßig über Hochspannungsmasten geführt. Um die Hochspannungsmasten elektrisch von den Hochspannungsleitungen zu trennen, sind an den Aufhängungspunkten zwischen den Hochspannungsleitungen und den Hochspannungsmasten jeweils Hochspannungsisolatoren vorgesehen. Dabei kommen häufig Langstabisolatoren zum Einsatz, die an Traversen des Hochspannungsmastes aufgehängt sind und an deren freien Ende die Hochspannungsleitung befestigt ist.

Auch wenn die Hochspannungsisolatoren grundsätzlich ausreichend für die gewünschte Isolation zwischen Hochspannungsleitung und Hochspannungsmast ausgelegt sind, kommt es immer wieder zu sog. Erdschlüssen und Erdkurzschlüssen, bei denen ein Hochspannungsisolator überbrückt wird und die daran befestigte Hochspannungsleitung über den Hochspannungsmast mit der Erde verbunden wird. Je nach Sternpunktbehandlung des Hochspannungsnetzes und der Dauer der Netzstörung können diese einpoligen Fehler massive Auswirkungen auf nachgelagerte Netze und angeschlossene Verbraucher haben, weshalb es im Stand der Technik Bestrebungen gibt, diese Störungen zu reduzieren und die Betriebssicherheit zu erhöhen.

Da als eine Ursache für das Auftreten von Erdschlüssen und Erdkurzschlüssen auf den Hochspannungsisolatoren unmittelbar auftreffender oder abgelagerter Vogeldreck - insbesondere in Kombination mit Feuchtigkeit - identifiziert wurde, schlägt bspw. die technische Spezifikation der Internationalen Elektrotechnischen Kommission IEC/TS 60815-1:200 - Auswahl und Bemessung von Hochspannungsisolatoren für die Anwendung unter Verschmutzungsbedingungen - Teil 1: Begriffe, Informationen und allgemeine Grundlagen vor "... Abschreckungsvorrichtungen oder Vogelstangen anzubringen, die an die örtliche Fauna und an die Konstruktion angepasst sind", um zu vermeiden, dass sich Vögel oberhalb der Hochspannungsisolatoren auf den Hochspannungsmasten niederlassen, ihr Geschäft verrichten und so die Hochspannungsisolatoren verschmutzen. Es hat sich jedoch gezeigt, dass durch entsprechende Vorrichtungen Erdschlüsse und Erdkurzschlüsse nur in überschaubaren Umfang reduziert werden können.

Auch sind Schutzvorrichtungen bekannt, bei denen unmittelbar am Hochspannungsmast oberhalb der Hochspannungsisolatoren auf den Masttraversen Überdachungen vorgesehen werden, die zum Fernhalten von Vogeldreck von den Hochspannungsisolatoren ausgebildet sind. Auch wenn über entsprechende Überdachungen die Verschmutzung der Hochspannungsisolatoren deutlich reduziert werden kann, weisen die Überdachungen gemäß dem Stand der Technik einige Nachteile auf. So sind die Kosten für die Beschaffung und die Montage der Überdachungen erheblich, die Maststatik insbesondere bei Eis, Schnee und Starkwind wird negativ beeinflusst und Wartungsarbeiten an den Masttraversen und den Hochspannungsisolatoren werden erschwert.

Die Dokumente JP 2003-189447 A und CN 203826142 U offenbaren jeweils einen Verschmutzungsschutz für Hochspannungsisolatoren aus zwei im Wesentlichen gleichförmig ausgestalteten Schutzschirmhälften, die seitliche an die Isolatorkappe herangeführt und durch eine sich durch entsprechende Anbindungsbereiche an den beiden Schutzschirmhälften und die Isolatorkappe erstreckende Schraube gesichert werden können.

Die Dokumente CN 104 200 935 und CN 105028385 A zeigt jeweils eine dazu vergleichbare Abschirmvorrichtung für Isolatoren, die ringförmig ausgestaltet ist, wobei die Ringöffnung zur Anlage an dem Isolator ausgebildet ist und der Ring wenigstens einfach geschlitzt ist, um die Abschirmvorrichtung seitlich auf einen Isolator aufzuschieben. Der wenigstens eine Schlitz wird nach dem Aufsetzen auf einen Isolator mit Schrauben oder Stiften verschlossen.

Die Verwendung von Schrauben zur Sicherung von Abschirmvorrichtungen in regelmäßig großer Höhe ist jedoch aufwendig und fehleranfällig. Außerdem entsteht während der Montage ein Gefahrenbereich am Fuß eines Hochspannungsmastes wegen evtl. herabfallender Metallteile, nämlich Schrauben.

Der Erfindung liegt daher die Aufgabe zugrunde, eine Vorrichtung zur wirksamen Reduzierung von Erdschlüssen und Erdkurzschlüssen an überirdischen Hochspannungsleitungen aufgrund von Vogeldreck zu schaffen, bei der die aus dem Stand der Technik bekannten Nachteile nicht mehr oder nur noch in vermindertem Umfang auftreten.

Gelöst wird diese Aufgabe durch eine Verschmutzungsschutzvorrichtung gemäß dem Hauptanspruch sowie eine Anordnung aus Verschmutzungsschutzvorrichtung und Hochspannungsisolator gemäß dem Anspruch 14. Vorteilhafte Weiterbildungen sind Gegenstand der abhängigen Ansprüche.

Demnach betrifft die Erfindung eine Verschmutzungsschutzvorrichtung für Hochspannungsisolatoren zur Befestigung an der Isolatorkappe eines Hochspannungsisolators mit einem Schutzschirm, der sich radial um eine Durchführungsöffnung für das Anschlusselement der Isolatorkappe erstreckt, wobei die Durchführungsöffnung auf der einen Seite des Schutzschirms von einen Befestigungsbereich zur formschlüssigen Verbindung mit der Isolatorkappe umgeben ist, und wobei auf der anderen Seite des Schutzschirms zwei Augen zum Durchstecken eines Laschenelementes und ein Laschenelement vorgesehen sind, wobei die Augen derart angeordnet sind, dass sich das Laschenelement nach Durchstecken durch die beiden Augen über die Durchführungsöffnung erstreckt, und wobei eine von der Durchführungsöffnung bis zu Außenkante des Schutzschirmes verlaufende radiale Montageöffnung zur seitlichen Durchführung des Anschlusselementes der Isolatorkappe vorgesehen ist und zu beiden Seiten der Montageöffnung Spunde einer Schwalbenschwanzverbindung zum wahlweise Schließen der Montageöffnung vorgesehen sind, wobei vorzugsweise wenigstens ein Teil der Spunde Verriegelungsnasen zum Sichern der Schwalbenschwanzverbindung in geschlossener Stellung aufweisen.

Die Erfindung betrifft außerdem eine Anordnung umfassend einen Hochspannungsisolator mit Isolatorkappe und eine durch Formschluss mit der Isolatorkappe verbundene, erfindungsgemäße Verschmutzungsschutzvorrichtung.

Die erfindungsgemäße Verschmutzungsschutzvorrichtung bietet einen guten Schutz für durch Vögel verursachte Verschmutzung, wobei der Vogeldreck insbesondere durch den Schutzschirm vom Hochspannungsisolator ferngehalten wird.

Die Erfindung hat erkannt, dass die bei Hochspannungsisolatoren - insbesondere wenn sie als Langstabisolatoren ausgebildet sind - zur Anbindung an einen Hochspannungsmast regelmäßig vorgesehenen Isolatorkappen besonders dazu geeignet sind, um daran eine Verschmutzungsschutzvorrichtung zu befestigen. Die Befestigung kann dabei zunächst durch Formschluss zwischen dem Befestigungsbereich der Verschmutzungsschutzvorrichtung und der Isolatorkappe erreicht werden, wozu das Anschlusselement der Isolatorkappe, mit dem die Isolatorkappe und damit der Hochspannungsisolator letztendlich an einem Hochspannungsmast befestigt werden, durch die Durchführungsöffnung der Verschmutzungsschutzvorrichtung geführt wird. Anschließend wird die Verschmutzungsschutzvorrichtung mit Hilfe des Laschenelementes an der Isolatorkappe gesichert, in dem das Laschenelement nacheinander durch das eine Auge an dem Schutzschirm, das durch die Durchführungsöffnung geführte Anschlusselement der Isolatorkappe und abschließend das andere Auge an dem Schutzschirm gesteckt wird. Handelt es sich bei der Isolatorkappe bspw. um eine Gabelkappe mit zwei voneinander beabstandeten Schenkeln kann das Laschenelement zwischen den beiden Schenkeln der Gabel hindurchgesteckt werden.

Indem sich der Schutzschirm radial um die Durchführungsöffnung und den Befestigungsbereich, der mit der Isolatorkappe zusammenwirkt, erstreckt, ist sichergestellt, dass sich der Schutzschirm über den gesamten Umfang des Hochspannungsisolators erstreckt. Dabei kann der Schutzschirm den Hochspannungsisolator überdecken, also vorzugsweise derart dimensioniert sein, dass die Ausdehnung des Schutzschirm senkrecht zur Längsachse des Hochspannungsisolators in allen Richtungen gleich oder größer ist als die jeweilige größte Ausdehnung des Hochspannungsisolatorschafts bzw. der daran angeordneten Isolatorschirme.

Eine bauliche Veränderung des Hochspannungsisolators, der Isolatorkappe und/oder dem Hochspannungsmast ist für die Installation einer erfindungsgemäßen Verschmutzungsschutzvorrichtung regelmäßig nicht erforderlich, sodass weiterhin auf normierte und bereits zugelassene Bauteile zurückgegriffen werden kann. Da die erfindungsgemäße Verschmutzungsschutzvorrichtung an der Isolatorkappe und damit an der Erdpotentialseite des Hochspannungsisolators angeordnet ist, muss sie auch keine besonderen elektrischen Anforderungen erfüllen.

Es ist vorgesehen, dass die Verschmutzungsschutzvorrichtung eine von der Durchführungsöffnung bis zur Außenkante des Schutzschirmes verlaufende radiale Montageöffnung zur seitlichen Durchführung des Anschlusselementes der Isolatorkappe der Verschmutzungsschutzvorrichtung aufweist. Durch eine entsprechende Montageöffnung lässt sich die Verschmutzungsschutzvorrichtung seitlich auf die Isolatorkappe aufschieben, sodass eine Montage der Verschmutzungsschutzvorrichtung selbst bei an einem Hochspannungsmast angebundener Isolatorkappe möglich ist.

Dabei sind zu beiden Seiten der Montageöffnung Spunde einer Schwalbenschwanzverbindung zum wahlweisen Schließen der Montageöffnung vorgesehen. Nach dem seitlichen Aufschieben der Verschmutzungsschutzvorrichtung auf die Isolatorkappe können die Spunde zu beiden Seiten der Montageöffnung in Überdeckung und durch eine Schließbewegung im Wesentlichen senkrecht zum Schutzschirm miteinander in Eingriff gebracht werden, um so die Schwalbenschwanzverbindung herzustellen.

Die Spunde können dabei in Richtung senkrecht zum Schutzschirm leicht angeschrägt sein, um das Schließen der Schwalbenschwanzverbindung zu erleichtern. Es ist bevorzugt, dass am Ende der Spunde jeweils eine Verriegelungsnase vorgesehen ist, die nach dem Schließvorgang der Schwalbenschwanzverschlüsse einrasten. Weiterhin ist bevorzugt, wenn am äußeren Rand des Schutzschirms alternativ oder zusätzlich ein Rastverschluss zum Sichern der Schwalbenschwanzverbindung gegen unbeabsichtigtes Öffnen vorgesehen ist. Dabei können sowohl die Verriegelungsnasen als auch der Rastverschluss insbesondere dazu ausgebildet sein, eine unbeabsichtigte relative Bewegung der Spunde zu beiden Seiten der Montageöffnung in Richtung senkrecht zum Schutzschirm - bspw. durch Windeinwirkung - zu verhindern, sodass die Schwalbenschwanzverbindung dauerhaft gesichert ist.

Das zur Sicherung der Verschmutzungsschutzvorrichtung verwendete Laschenelement weist vorzugsweise einen Kopf zur Anlage an das eine Auge im durchgesteckten Zustand und einen davon entfernten Widerhaken zum Hintergreifen des anderen Auges im durchgesteckten Zustand auf. Durch eine entsprechende Ausgestaltung wird das Laschenelement bei ordnungsgemäßen Durchstecken durch die beiden Augen am Schutzschirm unmittelbar gegen Herausrutschen gesichert.

Es ist bevorzugt wenn sich das Laschenelement um wenigstens 25%, vorzugsweise wenigstens 33% des Abstandes zwischen Kopf und Widerhaken über den Widerhaken hinaus erstreckt. Es hat sich gezeigt, dass die Handhabung der Verschmutzungsschutzvorrichtung und insbesondere das Durchstecken des Laschenelementes durch die beiden Augen des Schutzschirms deutliche vereinfacht werden kann und insbesondere ohne Werkzeugeinsatz möglich ist, wenn das Laschenelement über den für die letztendliche Sicherung der Verschmutzungsschutzvorrichtung relevanten Abschnitt zwischen Kopf und Widerhaken verlängert ist.

Vorzugsweise ist die Durchführungsöffnung auf der anderen Seite des Schutzschirms von einem umlaufenden, aus dem Schutzschirm hervorstehenden Rand umgeben. Durch einen entsprechenden Rand kann verhindert werden, dass sich ggf. auf dem Schutzschirm ansammelnde Verschmutzungen und/oder Flüssigkeiten durch die Durchführungsöffnung hindurchtreten und anschließend an dem Hochspannungsisolator entlanglaufen kann. Ist ein entsprechender Rand vorhanden, können die beiden Augen in diesen integriert sein.

Der umlaufende Rand kann an seiner Außenseite eine Führung für einen Kabelbinder aufweisen. Insbesondere wenn die Durchführungsöffnung und der umlaufende Rand zur Anlage an das Anschlusselement der Isolatorkappe ausgebildet ist, lässt sich durch das Festziehen eines am Rand geführten Kabelbinders ein Reibschluss zwischen umlaufenden Rand und Anschlusselement erreichen, mit dem die Verschmutzungsschutzvorrichtung zusätzlich an der Isolatorkappe eines Hochspannungsisolators gesichert werden kann. Insbesondere wenn die beiden Augen in den umlaufenden Rand integriert sind, ist es bevorzugt, wenn die die Führung des Kabelbinders so ausgestaltet ist, dass sich ein dort durchgeführter Kabelbinder auch über den Kopf des Laschenelementes erstreckt. Durch den Kabelbinder wird so eine zusätzliche Sicherung des Laschenelementes gegen unbeabsichtigtes Herausrutschen aus den Augen erreicht.

Es ist bevorzugt, wenn der Schutzschirm wenigstens einen wahlweise öffnenbaren, vom Rand des Schutzschirmes ausgehenden Durchbruch zur Durchführung des Befestigungsarms eines Lichtbogenschutzringes aufweist. Soll die Verschmutzungsschutzvorrichtung auf einen Hochspannungsisolator mit Lichtbogenschutzring montiert werden, kann der Durchbruch - bspw. durch Herausbrechen oder Herausschneiden des den Durchbruch verschließenden Materials - geöffnet werden, damit der Befestigungsarm des Lichtbogenschutzringes hindurchgeführt werden kann, wobei sich der Befestigungsarm in der Regel bei Auslenkung des Isolators bspw. durch Windlast relativ zu der Verschmutzungsschutzvorrichtung bewegen kann. Es ist bevorzugt, wenn die Verschmutzungsschutzvorrichtung wenigstens zwei, weiter vorzugsweise vier oder mehr entsprechender öffnenbarer Durchbrüche aufweist. Durch geeignete Anordnung der Durchbrüche kann die Verschmutzungsschutzvorrichtung für unterschiedliche Ausführungen von Hochspannungsisolatoren, Isolatorkappen und/oder Lichtbogenschutzringen geeignet sein, wobei dann der für eine konkrete Ausführung eines Hochspannungsisolators mit Lichtbogenschutzring geeignete Durchbruch geöffnet werden kann.

Es ist bevorzugt, wenn der oder die Durchbrüche auf der anderen Seite des Schutzschirmes jeweils von einem aus dem Schutzschirm hervorstehenden Rand umgeben sind. Vergleichbar zu dem oben beschriebenen die Durchführungsöffnung umlaufenden Rand, kann durch einen Rand um einen Durchbruch verhindert werden, dass Verschmutzungen und/oder Flüssigkeiten durch einen geöffneten Durchbruch gelangen und dann bspw. am Befestigungsarm des Lichtbogenschutzrings entlanglaufen und/oder unter gleichzeitiger Windeinwirkung die Isolatoroberfläche verschmutzen.

Es ist bevorzugt, wenn der Befestigungsbereich hutförmig und zum Stülpen über die Isolatorkappe ausgebildet ist. Durch eine entsprechende Formgebung lässt sich ein besonders guter Formschluss zwischen Befestigungsbereich und Isolatorkappe erreichen. Der Begriff "hutförmig" umfasst dabei sowohl Ausführungsvarianten, bei denen sich der Schutzschirm am unteren Ende des hutförmigen Bereichs in Art einer "Krempe" anschließt, als auch solche, bei denen das Dachs des hutförmigen Bereichs unmittelbar in den Schutzschirm übergeht.

Es ist bevorzugt, wenn der Schutzschirm zur Seite des Befestigungsbereichs hin geneigt ist. Damit ist der Schutzschirm im montierten Zustand der Verschmutzungsschutzvorrichtung an der Isolatorkappe eines Hochspannungsisolators regelmäßig derart geneigt, dass Regenwasser nach außen abfließt. Durch eine entsprechende Neigung kann auf dem Schutzschirm evtl. befindlicher Vogeldreck abgewaschen werden, wodurch eine natürliche Reinigung des Schutzschirms erreicht wird. Die Neigung des Schutzschirms beträgt vorzugsweise 10° bis 30°, weiter vorzugsweise 20° gegenüber der Horizontalen.

Es ist weiter bevorzugt, wenn an der Außenkante des Schutzschirmes eine Tropfkante vorgesehen ist. Dadurch kann sichergestellt werden, dass über den Schutzschirm abfließendes Regenwasser oder davon aufgeweichter Vogeldreck nicht an der Unterseite des Schutzschirmes nach Innen und in der Folge auf den Hochspannungsisolator gelangt. Die Tropfkante kann auch als Randelement ausgebildet sein, an dem der oben beschriebene Rastverschluss zum Sichern der Schwalbenschwanzverbindung angeordnet ist.

Die Verschmutzungsschutzvorrichtung kann aus Kunststoff hergestellt sein. Der Kunststoff kann dabei so gewählt werden, dass die Verschmutzungsschutzvorrichtung grundsätzlich ausreichend flexibel ist, um bspw. die Montageöffnung so zu weiten, dass die Verschmutzungsschutzvorrichtung seitlich auf einen Hochspannungsisolator aufgeschoben werden kann, oder um die Schwalbenschwanzverbindung schließen oder öffnen zu können. Andererseits sollte die Verschmutzungsschutzvorrichtung ausreichend unnachgiebig sein, um auch bei Windbelastung seine grundsätzliche Form beizubehalten und den gewünschten Verschmutzungsschutz gewährleisten zu können. Um dies zu erreichen, kann der Schutzschirm auf der Seite des Befestigungsbereiches auch radiale Versteifungsstreben aufweisen.

Zur Erläuterung der erfindungsgemäßen Anordnung wird auf die vorstehenden Ausführungen verwiesen.

Die Erfindung wird nun anhand einer vorteilhaften Ausführungsform unter Bezugnahme auf die beigefügten Zeichnungen beispielhaft beschrieben. Es zeigen:
- Figur 1:: eine schematische Darstellung eines Hochspannungsmastes umfassend erfindungsgemäße Anordnungen aus Hochspannungsisolatoren mit erfindungsgemäßen Verschmutzungsschutzvorrichtungen;
- Figur 2a, b:: schematische Detaildarstellungen einer erfindungsgemäßen Verschmutzungsschutzvorrichtung aus Figur 1; und
- Figur 3a, b:: schematische Detaildarstellungen einer Anordnung aus der Verschmutzungsschutzvorrichtung gemäß Figur 2a, b und einem Hochspannungsisolator gemäß Figur 1.

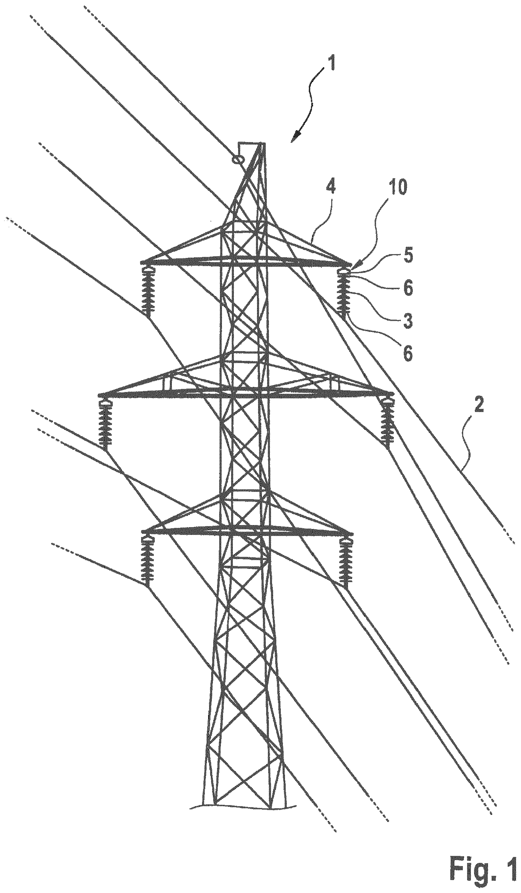

In Figur 1 ist ein Hochspannungsmast 1 mit daran aufgehängten Hochspannungsleitungen 2 dargestellt. Die Hochspannungsleitungen 2 sind über Hochspannungsisolatoren 3 an den Traversen 4 befestigt, welche die Hochspannungsleitungen 2 elektrisch von dem Hochspannungsmast 1 und damit dem Erdpotential trennen. Zur Befestigung der Hochspannungsisolatoren 3 an den Traversen 4 weisen diese Isolatorkappen 5 auf.

An den Hochspannungsisolatoren 3 ist am oberen und unteren Ende jeweils ein Lichtbogen-Schutzring 6 vorgesehen, zwischen denen ein evtl. entstehender Lichtbogen über den Hochspannungsisolator 3 hinweggeführt wird, um den Hochspannungsisolator 3 selbst nicht zu beschädigen.

Am oberen Ende jedes Hochspannungsisolators 3 ist weiterhin eine erfindungsgemäße Verschmutzungsschutzvorrichtung 10 vorgesehen.

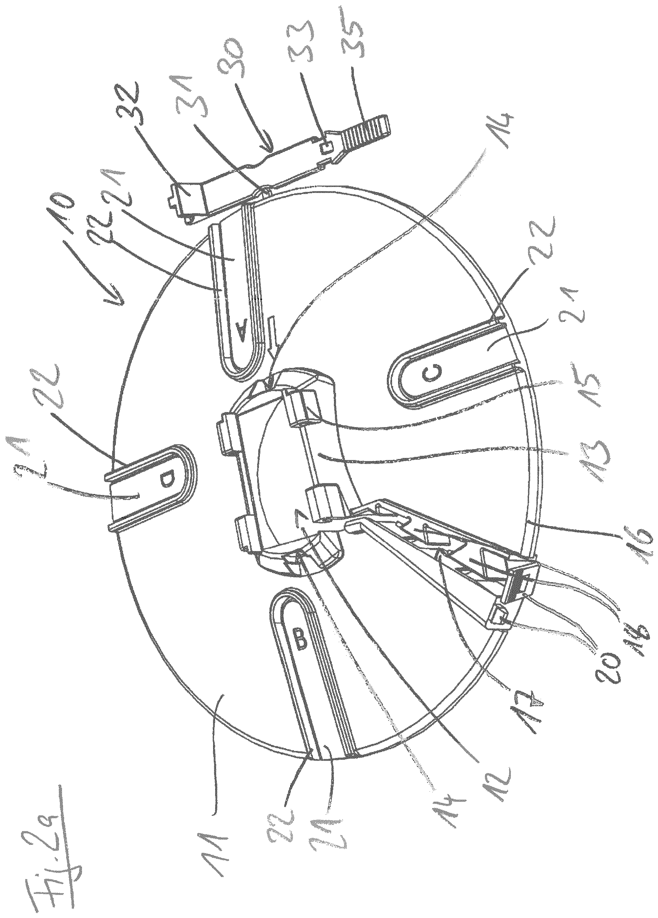

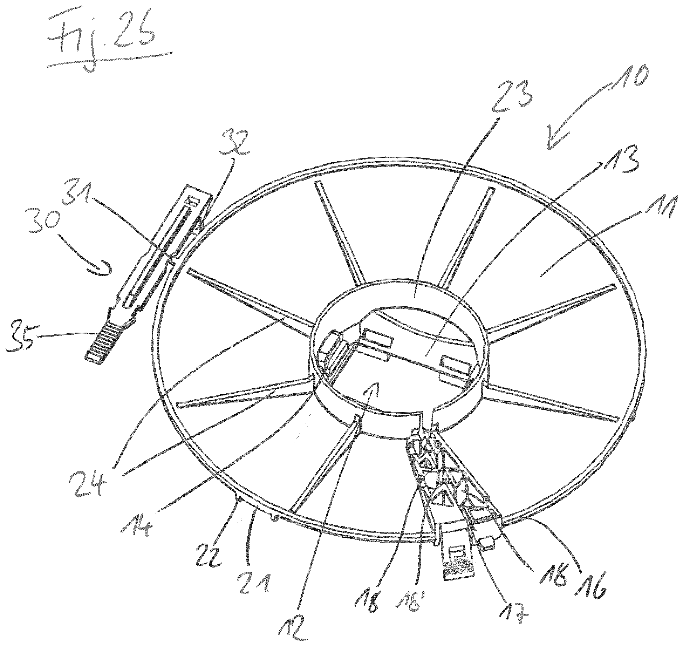

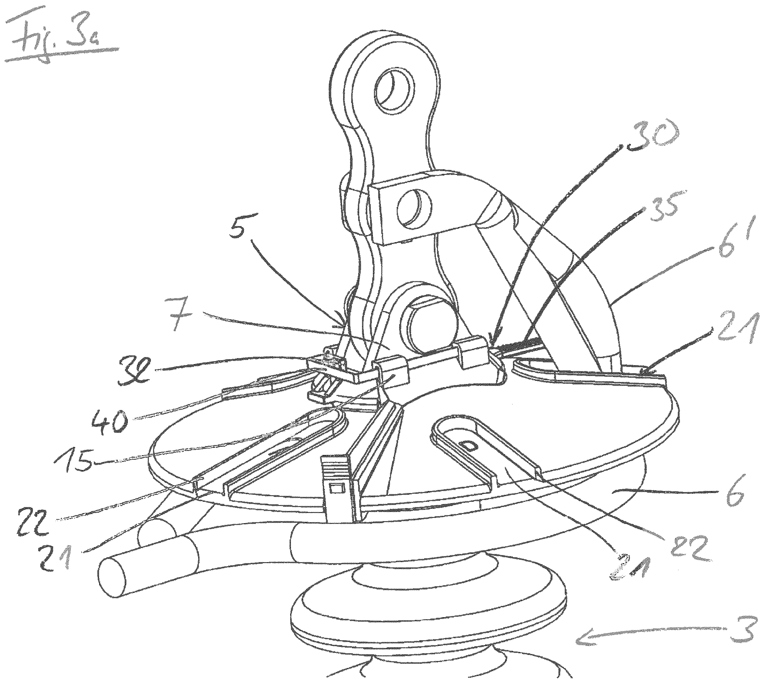

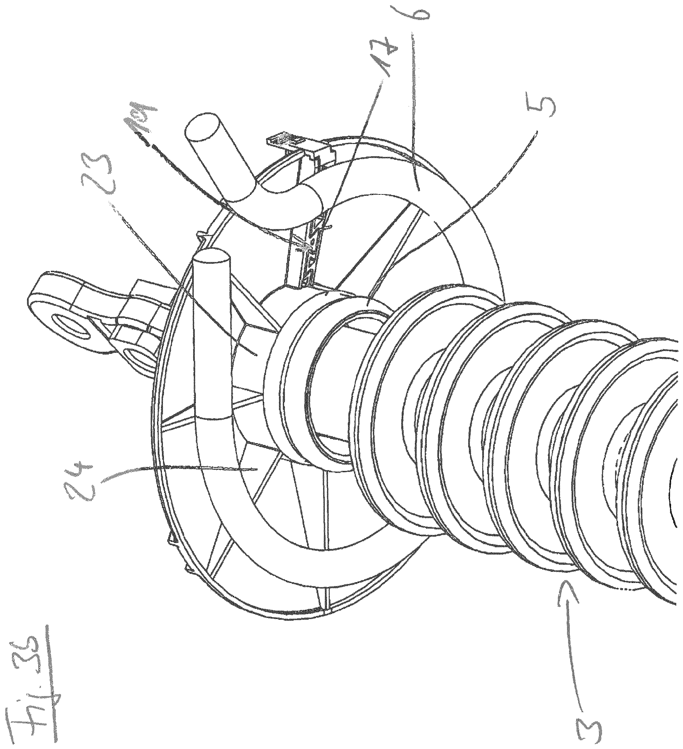

In Figur 2a, b ist die in Figur 1 verwendete Verschmutzungsschutzvorrichtung 10 im unmontierten Zustand dargestellt, während Figur 3a, b die Verschmutzungsschutzvorrichtung 10 im an einem Hochspannungsisolator 3 montierten Zustand zeigt, wobei der Hochspannungsisolator 3 einen Lichtbogenschutzring aufweist. Die Verschmutzungsschutzvorrichtung 10 ist einstückig aus Kunststoff hergestellt.

Die Verschmutzungsschutzvorrichtung 10 weist einen kreisrunden Schutzschirm 11 auf, in dessen Mitte eine Durchführungsöffnung 12 für das Anschlusselement 7 der Isolatorkappe 5 vorgesehen ist. Auf der Oberseite des Schutzschirms 11 ist die Durchführungsöffnung 12 von einem umlaufenden Rand 13 umgeben, wobei Durchführungsöffnung 12 und umlaufender Rand 13 so ausgebildet sind, dass sie im montierten Zustand der Verschmutzungsschutzvorrichtung 10 an dem Anschlusselement 7 der Isolatorkappe 5 anliegen (vgl. Figur 3a, b).

Im Rand 13 ist auf zwei gegenüberliegenden Seiten der Durchführungsöffnung 12 jeweils ein Auge 14 zum Durchstecken eines Laschenelementes 30 vorgesehen.

Das Laschenelement 30 ist im Herstellungszustand über eine Materiabrücke 31 mit der übrigen Verschmutzungsschutzvorrichtung 10 verbunden, wobei die Materialbrücke 31 für die Montage der Verschmutzungsschutzvorrichtung 10 werkzeugfrei gelöst werden kann. Das Laschenelement 30 ist langgestreckt und weist einen Kopf 32 sowie einen entfernt davon angeordneten Widerhaken 33 auf. Der Abstand zwischen Kopf 32 und Widerhaken 33 entspricht dabei im Wesentlichen dem Abstand zwischen den beiden Augen 14 am Schutzschirm 11. Ausgehend vom Kopf 32 erstreckt sich das Laschenelement 30 noch mit einem Griffabschnitt 35 um ca. 25% des genannten Abstandes über den Widerhaken 33 hinaus.

Befindet sich die Verschmutzungsschutzvorrichtung 10 auf einer Isolatorkappe 3, sodass deren Anschlusselement 7 durch die Durchführungsöffnung 12 ragt, wird das zuvor von dem Schutzschirm 11 separierte Laschenelement 30 durch das eine Auge 14 eingesteckt, anschließend durch das Anschlusselement 7 geführt und abschließend durch das andere Auge 14 hindurchgesteckt. Anschließend kann das Laschenelement 30 an dem Griffabschnitt 35 gezogen werden, bis der Widerhaken 33 einrastet. Das Laschenelement 30 liegt dann mit seinem Kopf 32 an dem einen Auge 14 und mit seinem Widerhaken 33 an dem anderen Auge 14 an und ist durch den Widerhaken 33 bereits grundsätzlich in dieser Position gesichert.

Eine zusätzliche Sicherung wird durch einen Kabelbilder 40 erreicht, der durch Führungen 15 am umlaufenden Rand 13 derart geführt ist, dass er sich über den Kopf 32 des Laschenelementes 30 erstreckt und diesen somit in seiner Position sichert. Wird der Kabelbilder 40 ausreichend festgezogen, wird aufgrund der daraus resultierenden elastischen Verformung des umlaufenden Randes 13 weiterhin ein Reibschluss zwischen umlaufenden Rand 13 und dem Anschlusselement 7 hergestellt, mit dem die Verschmutzungsschutzvorrichtung 10 insgesamt gegenüber der Isolatorkappe weiter gesichert wird.

Um die Verschmutzungsschutzvorrichtung 10 auch auf einen bereits installierten Hochspannungsisolator 3 montieren zu können, weist der Schutzschirm 11 eine von der Durchführungsöffnung 12 bis zur Außenkante 16 des Schutzschirmes 11 verlaufende radiale Montageöffnung 17 zur seitlichen Durchführung des Anschlusselementes 7 der Isolatorkappe 5 auf. Zu beiden Seiten der Montageöffnung 17 sind dabei Spunde 18 einer Schwalbenschwanzverbindung 19 zum wahlweisen Schließen der Montageöffnung 17 vorgesehen, wie dies in Figur 3a, b gezeigt ist. Um die Schwalbenschwanzverbindung 19 im geschlossenen Zustand zu sichern, sind am Ende eines Teils der Spunde je eine Verriegelungsnase 18` und an der Außenkante 16 des Schutzschirmes 11 ein Rastverschluss 20 vorgesehen, mit dem ein unbeabsichtigtes Lösen der Schwalbenschwanzverbindung 19, bspw. aufgrund von Windeinwirkung, wirksam vermieden werden kann.

An dem Schutzschirm 11 sind ausgehend von dessen Außenkante 16 vier Durchbrüche 21 angelegt, die wahlweise geöffnet werden können, in dem das die Durchbrüche 21 verdeckende Material entfernt wird. Dazu ist entlang der Außenkante jedes Durchbruchs 21 eine Vertiefung vorgesehen, an der das fragliche Material einfach herausgeschnitten werden kann. Die Durchbrüche 21 sind so angeordnet, dass sie jeweils zur Durchführungen des Befestigungsarmes 6` eines Lichtbogenschutzrings 6 in einer bestimmten Konfigurationen genutzt werden können. Abhängig von der tatsächlichen Konfiguration kann der geeignete Durchbruch 21 geöffnet werden.

Die Durchbrüche 21 sind jeweils auf der Oberseite des Schutzschirms 11 von einem Rand 22 umgeben, mit dem auf dem Schutzschirm 11 auftreffende Flüssigkeiten und Verschmutzung von einem geöffneten Durchbruch 21 abgehalten werden.

Auf der Unterseite des Schutzschirms 11 ist die Durchführungsöffnung 12 von einen hutförmig ausgestalteten Befestigungsbereich 23 umgeben, der formschlüssig mit der Isolatorkappe 5 eines Hochspannungsisolators 3 zusammenwirken kann. Weiterhin sind auf der Unterseite des Schutzschirms 11 radiale Versteifungsstreben 24 vorgesehen, welche der Verschmutzungsschutzvorrichtung 10 trotz der für die Montage erforderlichen Elastizität ausreichend Steifigkeit verleihen, damit sich die Verschmutzungsschutzvorrichtung 10 auch bei Windbelastung nicht so stark verformt, dass sie keine Wirkung mehr entfaltet.

Der Schutzschirm 11 ist insgesamt so zur Außenkante 16 hin geneigt, dass bei ordnungsgemäßer Montage darauf auftreffender Regen zur Außenkante 16 hin abfließt. Die Außenkante 16 ist dabei als Tropfkante ausgebildet.

## Patentansprüche

1. Verschmutzungsschutzvorrichtung (10) für Hochspannungsisolatoren (3) zur Befestigung an der Isolatorkappe (5) eines Hochspannungsisolators (3) mit einem Schutzschirm (11), der sich radial um eine Durchführungsöffnung (12) für das Anschlusselement (7) der Isolatorkappe (5) erstreckt, wobei die Durchführungsöffnung (12) auf der einen Seite des Schutzschirms (11) von einem Befestigungsbereich (23) zur formschlüssigen Verbindung mit der Isolatorkappe (5) umgeben ist,
wobei auf der anderen Seite des Schutzschirms (11) zwei Augen (14) zum Durchstecken eines Laschenelementes (30) und ein Laschenelement (30) vorgesehen sind, wobei die Augen (14) derart angeordnet sind, dass sich das Laschenelement (30) nach Durchstecken durch die beiden (14) Augen über die Durchführungsöffnung (12) erstreckt, **dadurch gekennzeichnet, dass** eine von der Durchführungsöffnung (12) bis zu Außenkante (16) des Schutzschirmes (11) verlaufende radiale Montageöffnung (17) zur seitlichen Durchführung des Anschlusselementes (7) der Isolatorkappe (5) vorgesehen ist und zu beiden Seiten der Montageöffnung (17) Spunde (18) einer Schwalbenschwanzverbindung (19) zum wahlweise Schließen der Montageöffnung (17) vorgesehen sind, wobei vorzugsweise wenigstens ein Teil der Spunde (18) Verriegelungsnasen (18') zum Sichern der Schwalbenschwanzverbindung (19) in geschlossener Stellung aufweisen.

2. Verschmutzungsschutzvorrichtung nach einem Anspruch 1, **dadurch gekennzeichnet, dass** die Verschmutzungsschutzvorrichtung (10) aus Kunststoff hergestellt ist, wobei der Kunststoff dabei so gewählt ist, dass die Verschmutzungsschutzvorrichtung (10) grundsätzlich ausreichend flexibel ist, um die Montageöffnung (17) so zu weiten, dass die Verschmutzungsschutzvorrichtung (10) seitlich auf den Hochspannungsisolator (3) aufgeschoben werden kann, oder um die Schwalbenschwanzverbindung (19) schließen oder öffnen zu können.

3. Verschmutzungsschutzvorrichtung nach einem der vorhergehenden Ansprüche,
**dadurch gekennzeichnet, dass**
am äußeren Rand des Schutzschirms (12) ein Rastverschluss (20) zum Sichern der Schwalbenschwanzverbindung (19) gegen unbeabsichtigtes Öffnen vorgesehen ist.

4. Verschmutzungsschutzvorrichtung nach einem der vorhergehenden Ansprüche,
**dadurch gekennzeichnet, dass**
das Laschenelement (30) einen Kopf (32) zur Anlage an das eine Auge (14) im durchgesteckten Zustand und einen davon entfernten Widerhaken (33) zum Hintergreifen des anderen Auges (14) im durchgesteckten Zustand aufweist.

5. Verschmutzungsschutzvorrichtung nach Anspruch 4,
**dadurch gekennzeichnet, dass**
sich das Laschenelement (30) um wenigstens 25%, vorzugsweise wenigstens 33% des Abstandes zwischen Kopf (32) und Widerhaken (33) über den Widerhaken (33) hinaus erstreckt.

6. Verschmutzungsschutzvorrichtung nach einem der vorhergehenden Ansprüche,
**dadurch gekennzeichnet, dass**
die Durchführungsöffnung (12) auf der anderen Seite des Schutzschirms (11) von einem umlaufenden, aus dem Schutzschirm (11) hervorstehenden Rand (13) umgegeben ist, in den vorzugsweise die beiden Augen (14) integriert sind.

7. Verschmutzungsschutzvorrichtung nach Anspruch 6,
**dadurch gekennzeichnet, dass**
der umlaufende Rand (13) an seiner Außenseite eine Führung (15) für einen Kabelbinder (40) aufweist, wobei die Führung (15) vorzugsweise derart ausgestaltet ist, dass ein dort durchgeführter Kabelbinder (40) auch über den Kopf (32) des durchgesteckten Laschenelementes (30) erstreckt.

8. Verschmutzungsschutzvorrichtung nach einem der vorhergehenden Ansprüche,
**dadurch gekennzeichnet, dass**
der Schutzschirm (11) wenigstens einen, vorzugsweise wenigstens zwei, weiter vorzugsweise vier oder mehr wahlweise öffnenbare, vom Rand (16) des Schutzschirmes (11) ausgehende Durchbrüche (21) zur Durchführung des Befestigungsarms (6') eines Lichtbogenschutzringes (6) aufweist.

9. Verschmutzungsschutzvorrichtung nach Anspruch 8,
**dadurch gekennzeichnet, dass**
der oder die Durchbrüche (21) auf der anderen Seite des Schutzschirmes (11) jeweils von einem aus dem Schutzschirm (11) hervorstehenden Rand (22) umgeben ist.

10. Verschmutzungsschutzvorrichtung nach einem der vorhergehenden Ansprüche,
**dadurch gekennzeichnet, dass**
der Befestigungsbereich (23) hutförmig ausgestaltet ist.

11. Verschmutzungsschutzvorrichtung nach einem der vorhergehenden Ansprüche,
**dadurch gekennzeichnet, dass**
der Schutzschirm (11) so zur Außenkannte (16) hin geneigt ist, dass bei ordnungsgemäßer Montage darauf auftreffender Regen zur Außenkante (16) hin abfließt.

12. Vorrichtung nach einem der vorhergehenden Ansprüche,
**dadurch gekennzeichnet, dass**
an der Außenkante (16) des Schutzschirmes (11) eine Tropfkante vorgesehen ist.

13. Verschmutzungsschutzvorrichtung nach einem der vorhergehenden Ansprüche,
**dadurch gekennzeichnet, dass**
der Schutzschirm (11) auf der Seite des Befestigungsbereiches (23) radiale Versteifungsstreben (24) aufweist.

14. Anordnung umfassend einen Hochspannungsisolator (3) mit Isolatorkappe (5) und eine an der Isolatorkappe (5) angeordnete Verschmutzungsschutzvorrichtung (10), wobei die Verschmutzungsschutzvorrichtung (10) nach einem der vorhergehenden Ansprüche ausgebildet ist und durch Formschluss mit der Isolatorkappe (5) verbunden ist, wobei die Isolatorkappe (5) vorzugsweise eine Gabelkappe ist und/oder der Hochspannungsisolator (3) einen Lichtbogen-Schutzring (6) im Bereich der Isolatorkappe (5) aufweist.

## Claims

1. Contamination protection device (10) for high-voltage insulators (3) for fastening to the insulator cap (5) of a high-voltage insulator (3) having a protective shield (11), which extends radially around a leadthrough opening (12) for the connection element (7) of the insulator cap (5), wherein the leadthrough opening (12) is surrounded on one side of the protective shield (11) by a fastening region (23) for form-fit connection to the insulator cap (5), wherein two eyes (14) for pushing through a strap element (30) and a strap element (30) are provided on the other side of the protective shield (11), wherein the eyes (14) are arranged in such a way that the strap element (30), once pushed through the two eyes (14), extends over the leadthrough opening (12),
**characterized in that** a radial installation opening (17), which runs from the leadthrough opening (12) up to the outer edge (16) of the protective shield (11), is provided for laterally leading through the connection element (7) of the insulator cap (5), and pins (18) of a dovetail joint (19) are provided on both sides of the installation opening (17) for optionally closing the installation opening (17), wherein preferably at least some of the pins (18) have locking tabs (18') for securing the dovetail joint (19) in the closed position.

2. Contamination protection device according to Claim 1, **characterized in that** the contamination protection device (10) is manufactured from plastic, wherein the plastic is selected such that the contamination protection device (10) is in principle sufficiently flexible to widen the installation opening (17) in such a way that the contamination protection device (10) can be pushed laterally onto the high-voltage insulator (3), or to be able to close or open the dovetail joint (19).

3. Contamination protection device according to either of the preceding claims,
**characterized in that**
a latching closure (20) is provided at the outer rim (16) of the protective shield (12) for securing the dovetail joint (19) to prevent unintentional opening.

4. Contamination protection device according to one of the preceding claims,
**characterized in that**
the strap element (30) has a head (32) for bearing against one eye (14) in the pushed-through state and a barb (33), remote therefrom, for engaging behind the other eye (14) in the pushed-through state.

5. Contamination protection device according to Claim 4,
**characterized in that**
the strap element (30) extends beyond the barb (33) by at least 25%, preferably at least 33%, of the spacing between the head (32) and the barb (33).

6. Contamination protection device according to one of the preceding claims,
**characterized in that**
the leadthrough opening (12) is surrounded on the other side of the protective shield (11) by a circumferential rim (13) protruding from the protective shield (11), the two eyes (14) preferably being integrated in said rim.

7. Contamination protection device according to Claim 6,
**characterized in that**
the circumferential rim (13) has a guide (15) for a cable tie (40) on its outer side, wherein the guide (15) is preferably configured in such a way that a cable tie (40) led through there also extends over the head (32) of the pushed-through strap element (30).

8. Contamination protection device according to one of the preceding claims,
**characterized in that**
the protective shield (11) has at least one, preferably at least two, more preferably four or more, optionally openable apertures (21), starting from the rim (16) of the protective shield (11), for leading through the fastening arm (6') of an arc protection ring (6).

9. Contamination protection device according to Claim 8,
**characterized in that**
the aperture(s) (21) is or are surrounded on the other side of the protective shield (11) in each case by a rim (22) protruding from the protective shield (11).

10. Contamination protection device according to one of the preceding claims,
**characterized in that**
the fastening region (23) is configured in the form of a hat.

11. Contamination protection device according to one of the preceding claims,
**characterized in that**
the protective shield (11) is inclined towards the outer edge (16) in such a way that, when correctly installed, rain landing thereon flows away to the outer edge (16).

12. Device according to one of the preceding claims,
**characterized in that**
a drop edge is provided on the outer edge (16) of the protective shield (11).

13. Contamination protection device according to one of the preceding claims,
**characterized in that**
the protective shield (11) has radial reinforcing struts (24) on the side of the fastening region (23).

14. Arrangement comprising a high-voltage insulator (3) having an insulator cap (5) and a contamination protection device (10) arranged on the insulator cap (5), wherein the contamination protection device (10) is designed according to one of the preceding claims and is connected to the insulator cap (5) by means of a form fit, wherein the insulator cap (5) is preferably a fork-shaped cap and/or the high-voltage insulator (3) has an arc protection ring (6) in the region of the insulator cap (5).

## Revendications

1. Dispositif de protection contre l'encrassement (10) pour isolateurs haute tension (3) destiné à être fixé au chapeau d'isolateur (5) d'un isolateur haute tension (3) pourvu d'un écran de protection (11), lequel s'étend radialement autour d'une ouverture de traversée (12) pour l'élément de raccordement du chapeau d'isolateur (5), l'ouverture de traversée (12) étant entourée d'un côté de l'écran de protection (11) par une zone de fixation (23) servant à la liaison par complémentarité de formes avec un chapeau d'isolateur (5),
deux oeillets (14) destinés au passage traversant d'un élément formant barre de liaison (30) ainsi qu'un élément formant barre de liaison (30) étant présents de l'autre côté de l'écran de protection (11), les oeillets (14) étant disposés de telle sorte que l'élément formant barre de liaison (30), après être passé à travers les deux oeillets (14), s'étend au-dessus de l'ouverture de traversée (12), **caractérisé en ce que**
une ouverture de montage (17) radiale, qui suit un tracé de l'ouverture de traversée (12) jusqu'à l'arête extérieure (16) de l'écran de protection (11), est présente pour le passage latéral de l'élément de raccordement (7) du chapeau d'isolateur (5), et des languettes (18) d'un assemblage en queue d'aronde (19) servant à la fermeture sélective de l'ouverture de montage (17) sont présentes des deux côtés de l'ouverture de montage (17), au moins une partie des languettes (18) possédant des tenons de verrouillage (18') destinés à bloquer l'assemblage en queue d'aronde (19) en position fermée.

2. Dispositif de protection contre l'encrassement selon la revendication 1, **caractérisé en ce que** le dispositif de protection contre l'encrassement (10) est fabriqué en matière plastique, la matière plastique étant ici choisie de telle sorte que le dispositif de protection contre l'encrassement (10) est en principe suffisamment flexible pour élargir l'ouverture de montage (17) au point que le dispositif de protection contre l'encrassement (10) peut être emmanché latéralement sur l'isolateur haute tension (3), ou pour pouvoir fermer ou ouvrir l'assemblage en queue d'aronde (19).

3. Dispositif de protection contre l'encrassement selon l'une des revendications précédentes, **caractérisé en ce qu'**une fermeture à encliquetage (20) destinée à protéger l'assemblage en queue d'aronde (19) contre une ouverture involontaire se trouve au niveau du bord extérieur de l'écran de protection (12).

4. Dispositif de protection contre l'encrassement selon l'une des revendications précédentes, **caractérisé en ce que** l'élément formant barre de liaison (30) possède une tête (32) destinée à venir en appui contre un oeillet (14) à l'état traversé et un ardillon (33) distant de celle-ci pour venir en prise par l'arrière avec l'autre oeillet (14) à l'état traversé.

5. Dispositif de protection contre l'encrassement selon la revendication 4, **caractérisé en ce que** l'élément formant barre de liaison (30) s'étend au-delà de l'ardillon (33) d'au moins 25 %, de préférence d'au moins 33 % de l'écart entre la tête (33) et l'ardillon (33).

6. Dispositif de protection contre l'encrassement selon l'une des revendications précédentes, **caractérisé en ce que** l'ouverture de traversée (12) est entourée de l'autre côté de l'écran de protection (11) par un bord (13) périphérique faisant saillie hors de l'écran de protection (11), dans lequel sont de préférence intégrés les deux oeillets (14) .

7. Dispositif de protection contre l'encrassement selon la revendication 6, **caractérisé en ce que** le bord (13) périphérique possède, sur son côté extérieur, un guide (15) pour un attache-câbles (40), le guide (15) étant de préférence configuré de telle sorte qu'un attache-câbles (40) qui y est passé s'étend également au-dessus de la tête (32) l'élément formant barre de liaison (30) passé à travers.

8. Dispositif de protection contre l'encrassement selon l'une des revendications précédentes, **caractérisé en ce que** l'écran de protection (11) possède au moins un, de préférence au moins deux, encore de préférence quatre ou plus percées (21) pouvant être ouvertes sélectivement, partant du bord (16) de l'écran de protection (11) et servant au passage du bras de fixation (6') d'un anneau parafoudre (6) .

9. Dispositif de protection contre l'encrassement selon la revendication 8, **caractérisé en ce que** la ou les percées (21), de l'autre côté de l'écran de protection (11), sont respectivement entourées par un bord (22) faisant saillie hors de l'écran de protection (11).

10. Dispositif de protection contre l'encrassement selon l'une des revendications précédentes, **caractérisé en ce que** la zone de fixation (23) est configurée en forme de chapeau.

11. Dispositif de protection contre l'encrassement selon l'une des revendications précédentes, **caractérisé en ce que** l'écran de protection (11) est incliné en direction de l'arête extérieure (16) de telle sorte que dans le cas d'un montage dans les règles de l'art, la pluie qui y est incidente s'écoule vers l'arête extérieure (16).

12. Dispositif de protection contre l'encrassement selon l'une des revendications précédentes, **caractérisé en ce qu'**une arête d'égouttement est présente au niveau de l'arête extérieure (16) de l'écran de protection (11).

13. Dispositif de protection contre l'encrassement selon l'une des revendications précédentes, **caractérisé en ce que** l'écran de protection (11) possède des nervures de renforcement (24) radiales sur le côté de la zone de fixation (23) .

14. Arrangement comprenant un isolateur haute tension (3) pourvu d'un chapeau d'isolateur (5) et un dispositif de protection contre l'encrassement (10) disposé au niveau du chapeau d'isolateur (5), le dispositif de protection contre l'encrassement (10) étant configuré selon l'une des revendications précédentes et étant relié au chapeau d'isolateur (5) par complémentarité de formes, le chapeau d'isolateur (5) étant de préférence un chapeau fourchu et/ou l'isolateur haute tension (3) possédant un anneau parafoudre (6) dans la zone du chapeau d'isolateur (5).
